# Europäisches Patentamt
# European Patent Office
# Office européen des brevets

(19)

(11) Veröffentlichungsnummer: **0 075 801**
**B1**

(12)

# EUROPÄISCHE PATENTSCHRIFT

(45) Veröffentlichungstag der Patentschrift:
**04.06.86**

(51) Int. Cl.⁴: **D 05 C 5/06**

(21) Anmeldenummer: **82108581.8**

(22) Anmeldetag: **17.09.82**

(54) **Verfahren und Vorrichtung zur Steuerung eines Stickautomaten.**

(30) Priorität: **26.09.81 DE 3138364**

(43) Veröffentlichungstag der Anmeldung:
**06.04.83 Patentblatt 83/14**

(45) Bekanntmachung des Hinweises auf die Patenterteilung:
**04.06.86 Patentblatt 86/23**

(84) Benannte Vertragsstaaten:
**AT CH DE FR GB LI**

(56) Entgegenhaltungen:
FR - A - 1 536 287
FR - A - 1 587 606
GB - A - 1 059 290
GB - A - 1 238 846
GB - A - 2 009 451
US - A - 3 568 614
US - A - 3 722 434
US - A - 3 752 095

ITB WEBEREI, Nr. 2, 1974, Seite 159, P. GUNOLD:
"Computergesteuerte Herstellung von Lochkarten für
Stickautomaten"
ITB WEBEREI, Band 2, Mai 1974, Seite 160 "Elektronisch
gesteuerte Musterungseinrichtung für
Tuftingmaschinen"

(73) Patentinhaber: **MÄNNEL, Friedrich, Neuenwegstrasse 8, D-7527 Kraichtal 3 (DE)**

(72) Erfinder: **MÄNNEL, Friedrich, Neuenwegstrasse 8, D-7527 Kraichtal 3 (DE)**

(74) Vertreter: **Moser, Herbert, Dr.-Ing., Nowackanlage 15, D-7500 Karlsruhe (DE)**

## Beschreibung

Die Erfindung betrifft ein Verfahren zur Steuerung eines Stickautomaten, insbesondere zur Herstellung von Etiketten und Abzeichen, bei dem die einzelnen Bildpunkte von einem vorgelegten Motivträger abgenommen und als Stickprogramm in ein Speicherelement übertragen werden, welches mindestens einen Stickautomaten steuert. Ausserdem ist eine vorteilhafte Vorrichtung zur Durchführung des Verfahrens angegeben.

Gestickte oder gewebte Etiketten und Abzeichen sind schwarz-weiss oder farbig in vielen Ausführungsformen bekannt. Bei Etiketten handelt es sich beispielsweise um Waren- bzw. Grössenangaben, die am fertigen Produkt nicht unmittelbar wahrgenommen werden sollen. Abzeichen und Embleme treten äusserlich hervor und werden beispielsweise zur Kennzeichnung einer bestimmten Betriebszugehörigkeit verwendet.

Zur Herstellung solcher Etiketten und Abzeichen werden sowohl Kleinstickautomaten als auch Grossstickautomaten verwendet, bei denen die Steuerung des Rahmenantriebs durch Lochkartenbänder, sogenannte «Jacquard-Karten» erfolgt. Bei der Anfertigung von «Jacquard-Karten» muss aus dem zu stickenden Motiv zuerst eine z.B. im Verhältnis 1:6 vergrösserte Zeichnung, die sogenannte «Punch-Zeichnung» hergestellt werden. Mit Hilfe von «Punch-Maschinen» werden dann durch Abfahren der einzelnen Bildpunkte die Bewegungsinformationen für den Stickautomaten auf das «Jacquard-Kartenband» übertragen. Die Übertragung auf derartige Speicherelemente in Form von Lochkarten erfordert einen hohen Zeitaufwand.

Neuere Entwicklungen von «Punch-Maschinen», die teilweise mit Computerunterstützung arbeiten, können auch einfache Linien und Ränder durch Abfahren mit einem Führungsstift errechnen und auf das Lochkartenband oder in ein magnetisches Mehrkanalspeicherband übertragen.

Während bei der Handlochung durch gelernte «Puncher» eine maximale Geschwindigkeit bei der Herstellung der Stickprogramme von etwa 40 Stich pro Minute erreicht wird, erhöht sich diese Geschwindigkeit durch die Anwendung der angegebenen halbautomatischen «Punch-Maschinen» auf etwa 150 bis 180 Stich pro Minute.

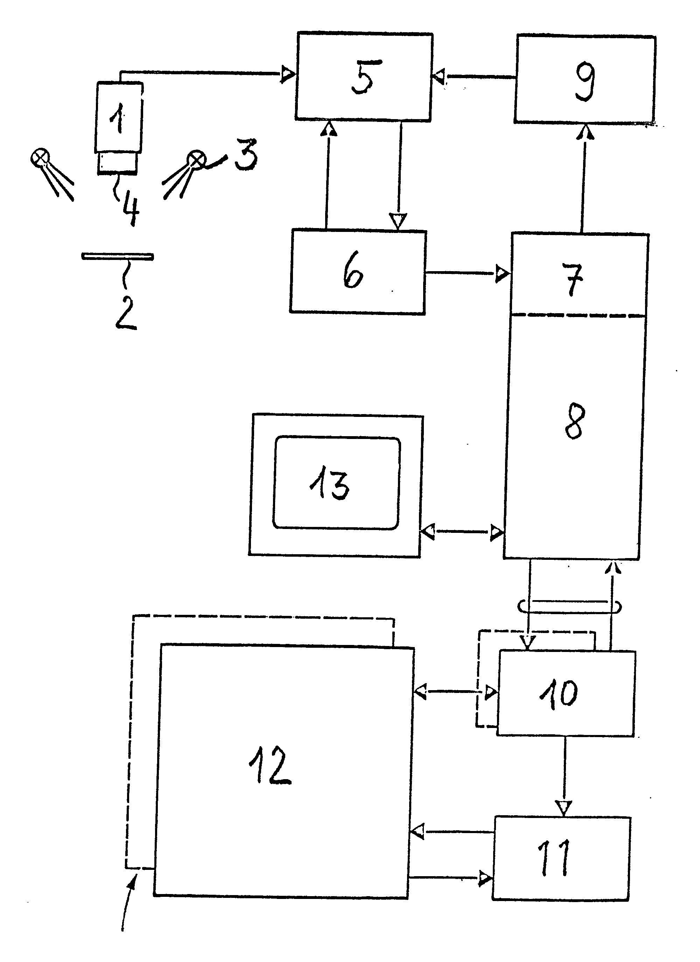

Ein teilautomatisiertes System, bei dem als Datenträger des Stickprogrammes ein Achtkanal-Lochstreifen oder eine Magnetband-Cassette benutzt werden, ist durch die Literaturstelle ITB-Weberei Nr. 2, 1974, 159/160 P. Gunold «Computergesteuerte Herstellung von Lochkarten für Stickautomaten» bekannt. Bei diesem Verfahren werden die Daten der Zeichnung, d.h. die Koordinaten der Motivbestandteile mit einem digital arbeitenden Koordinatenlesegerät in einen Prozessrechner eingegeben. Die Ausgabe der berechneten Stiche wird von dem als Programm-Zwischenträger benutzten Achtkanal-Lochstreifen oder Magnetband-Cassette mit Hilfe eines Lesers und Lochkartenstanzers auf die herkömmliche Stickautomatenkarte übertragen. Die wichtigsten Sticharten wie Blattstich, Steppstich, Stilstich sind programmiert.

Die Erfindung geht von der Aufgabenstellung aus, ein Verfahren zur Steuerung eines Stickautomaten, vorzugsweise zur Herstellung von Etiketten und Abzeichen, anzugeben, mit dessen Hilfe die Herstellung des Stickprogramms im wesentlichen automatisch und ohne Handführung eines Koordinatenlesegerätes erreicht werden kann. Bei einem solchen Stickprogramm soll ausserdem eine wirkungsvolle Unterdrückung von Fehlern erreicht werden, die entweder zufällig in der Mustervorlage vorhanden sind oder durch unterschiedliche Beleuchtung dieser Mustervorlage vorgetäuscht werden.

Zur Lösung dieser Aufgabenstellung ist vorgesehen, dass von der Mustervorlage den einzelnen Bildpunkten entsprechende Grauwerte durch eine Abtastvorrichtung zeilenweise abgetastet werden, dass diese Grauwerte für jeden Bildpunkt der einen Grauwert beliebiger Intensität (zwischen weiss und schwarz) darstellt, mit einer einstellbaren Grauwertschwelle verglichen, als oberhalb oder unterhalb der Grauwertschwelle liegend klassifiziert und binär zu einem Motivbild umgesetzt werden, dass die binären Werte gespeichert und einem Digitalrechner zugeführt werden, in dem Umsetzungsprogramme für Stichtechniken gespeichert sind, die verschiedenen bekannten und in jedem Stickmuster wiederkehrenden geometrischen Bildformen wie Linien oder Flächen zugeordnet sind, dass das binär umgesetzte Motivbild abschnittsweise aus den gespeicherten Bildformen zusammengesetzt wird, und dass das vom Digitalrechner erstellte Stickprogramm direkt oder indirekt (über einen nachgeschalteten Programmspeicher auf Abruf) an den Stickautomaten ausgegeben wird.

In einer alternativen Ausführung der Erfindung kann es zweckmässig sein, anstelle der Grauwertschwelle ein aus zwei Grauwerten unterschiedlicher Intensität gebildetes einstellbares Grauwertfenster zu verwenden und festzustellen, ob der Bildpunkt innerhalb oder ausserhalb dieses Fensters liegt.

Das Verfahren der Digitalisierung mit Hilfe einer Grauwertschwelle bzw. eines Grauwertfensters ermöglicht bei entsprechender Einstellung einen Ausgleich von durch unterschiedliche Beleuchtung der Mustervorlage vorgetäuschten Intensitätsunterschieden.

Durch die einstellbare Ausbildung der Grauwertschwelle bzw. der Breite des Grauwertfensters kann das Verfahren den Gegebenheiten der Mustervorlage und der Beleuchtung angepasst werden. Unbeabsichtigte Unregelmässigkeiten in der Mustervorlage werden durch entsprechende Einstellung der Grauwertschwelle ausgefiltert. Dabei lassen sich Webfehler einer Mustervorlage bei der Umsetzung unterdrücken. Die Grauwertschwelle wird hierzu so hoch eingestellt, dass die unbeabsichtigten Unregelmässigkeiten des Motivs nicht mehr unterschieden werden können. Für den gleichen Zweck lässt sich auch das Grauwertfenster durch die absoluten Höhen seiner beiden Intensitätswerte entsprechend festlegen.

Gemäss der Erfindung soll das abtastbare Bild eine Mustervorlage des Motivs darstellen, welche die Umsetzung von Helligkeitswerten in elektrische, magnetische oder optische Ausgangsgrössen ermöglicht. Die zeilenweise Abtastung kann sowohl horizontal als auch vertikal ausgeführt werden. Es ist ferner die Verwendung einer sogenannten Zeilenkamera möglich, bei der alle Punkte einer Zeile nicht nacheinander, sondern gleichzeitig abgetastet werden. Anstelle der Grauwertumsetzung kann auch eine andere beispielsweise monochromatische Umsetzung angewendet werden, wobei anstelle der Grauwertschwelle eine entsprechende Farbintensitätsschwelle bewertet wird.

Das binär umgesetzte Motivbild wird im Digitalrechner analysiert und selbständig durch Vergleich mit vorprogrammierten Bildformen in ein Stickprogramm umgesetzt. Im Digitalrechner sind dabei Umsetzungsprogramme für Sticktechniken gespeichert, die verschiedenen bekannten und in jedem Stickmuster wiederkehrenden geometrischen Bildformen wie Linien oder Flächen entsprechen. Die in binäre Zahlenwerte umgesetzten Motivbilder lassen sich dann nach entsprechendem Vergleich wenigstens abschnittsweise aus den gespeicherten Bildformen zusammensetzen. Die verschiedenen bekannten geometrischen Bildformen sind dabei Geraden und Kurven verschiedener Krümmung sowie Flächen unterschiedlicher Grösse zur Festlegung des Stickprogramms, welches auch die anzuwendende Stichart, nämlich Steppstich oder Blattstich, enthält.

In einer zweckmässigen Ausbildung des Verfahrens kann vorgesehen sein, dass vor dem Erstellen des Stickprogramms durch den Digitalrechner zusätzliche Eingabegrössen wie Stichtechnik, Richtungsvorgabe, Schrittweite und optimale Einstichstelle sowie Garnrückführung eingegeben werden.

Die angegebenen Verfahren zur Steuerung eines Stickautomaten mit digitalisierter Motivvorlage eignen sich speziell zur schrittweisen Steuerung des Rahmens von Stickautomaten mit entsprechender Koordinatenverschiebung des Stickrahmens.

Die Arbeitsbedingungen bei der Motivumsetzung sind für Stickprogramme wegen der gestaltungsfreien Anordnung der Stickpunkte in der Fläche erheblich schwieriger als beispielsweise bei der Umsetzung von Webmotiven in Webprogramme, bei denen nach der Herstellungsart der Web- oder Wirkware jeweils eine Vorzugsrichtung in zwei zueinander senkrechten Arbeitseinrichtungen vorliegt. Ausserdem erfordern Stickprogramme eine der Flächengrösse der vorliegenden Bildformen angepasste Sticktechnik. Während beispielsweise linienförmige Bildelemente mit den in Linien nacheinander folgenden Steppstichen wiedergegeben werden, sind für Flächen im allgemeinen sogenannte Blattstiche mit zur Randkontur im wesentlichen senkrecht nebeneinanderliegenden Fäden anzuwenden. Bei grösseren Flächen lässt sich jedoch die Blattsticktechnik wegen der damit verbundenen grossen Fadenspannweiten nicht mehr anwenden, weil hier die Gefahr von Beschädigungen beim Gebrauch bzw. beim Waschen entsteht. Grössere Flächen sind daher durch parallelgeführte Steppstichreihen wiederzugeben. Die erforderlichen Unterscheidungen nach Bildform bzw. Flächengrösse werden vorteilhaft ebenfalls automatisch im Digitalrechner ausgeführt.

Es kann ferner zweckmässig sein, dass bei Motiven, welche in Bildausschnitten nicht eindeutig analysiert oder vom Digitalrechner einer vorprogrammierten Fläche oder Linienform nicht zugeordnet werden können, der betreffende Bildausschnitt auf einem Bildschirm ausgegeben und eine Arbeitsanweisung durch eine Bedienungsperson angefordert wird.

Die Durchführung des Verfahrens erfolgt zweckmässig mit einer opto-elektronischen Abtastvorrichtung, beispielsweise mit einer Video-Kamera. Bei farbigen Motiven werden dabei zweckmässig die den einzelnen Farben entsprechenden abtastbaren Bilder durch Vorschalten von Farbfiltern vor das Objektiv der Video-Kamera nacheinander erzeugt. Bei farbigen Motiven entspricht die Anzahl der Bilder demnach der Anzahl der Farben, so dass für jede Farbe ein optoelektronisch, magnetisch oder optisch abtastbares Bild zur Verfügung steht, dessen einzelne Bildpunkte durch Vergleich mit entsprechenden Schwellen in binäre Zahlenwerte umsetzbar sind.

Anstelle einer zweckmässig nacheinander durchgeführten Abtastung des Motivs, unter Vorschaltung entsprechender Farbfilter, kann gegebenenfalls zweckmässig auch eine der Einzelfarbe entsprechende monochromatische Beleuchtung gewählt werden, so dass das abtastbare Bild ohne Filtervorschaltung entsteht. Aus Gründen der vereinfachten Bedienung dürfte im allgemeinen die Farbfilteranwendung vorzuziehen sein. Die Festlegung der Grauwertschwelle oder der beiden Intensitätswerte des Grauwertfensters bzw. der Farbintensitätsschwelle, welche eine Unterdrückung der unbeabsichtigten Unregelmässigkeiten der Motivvorlage herbeiführt, kann zweckmässig auch durch die Schärfeeinstellung des Objektivs beeinflusst werden. Eine gewisse Unschärfe vermeidet die Unterscheidung unbeabsichtigter und im Stickprogramm nicht wiederzugebender Fehlerstellen der Vorlage.

Bei kontrastarmen Motiven kann vorteilhaft eine elektronische Kontrastanhebung vorgesehen sein, die den Grauwertbereich bzw. den Farbwertbereich bei monochromatischen Motiven spreizt. Derartige elektronische Kontrastanhebungen und die hierfür verwendbaren Schaltungen zur Kontraststeigerung sind in der Fernsehtechnik, insbesondere bei Nachtsichtgeräten, in verschiedener Ausbildung bekannt.

Bei Motiven, die in Blattstichtechnik hergestellt werden, erscheint es zweckmässig, durch entsprechende mathematische Mittelwertbildung zwischen den digitalisierten Werten eine Randglättung der Konturen des digitalen Bildes zur Festlegung der eindeutigen Stickrichtung auszuführen. Die Stickrichtung, bzw. die Fadenspannung, erstreckt sich dabei im wesentlichen senkrecht zu den Flächenelementen der Randkontur.

Eine zweckmässige Vorrichtung zur Durchführung des Verfahrens kann so aufgebaut sein, dass vor einem Motivträger eine opto-elektronische Abtastvorrichtung angeordnet ist, dass der Abtastvorrichtung ein Grauwertkomparator nachgeschaltet ist, dass der Ausgang des Grauwertkomparators mit einem Digitalrechner in Verbindung steht, und dass der Digitalrechner mit mindestens einem Stickautomaten verbunden ist. Das vom Digitalrechner erzeugte Stickprogramm kann unmittelbar über eine Schrittmotorsteuerung die Rahmen eines Stickautomaten entsprechend der gewünschten Stichfolge verschieben. Anstelle der direkten Steuerung wird in vielen Fällen eine Speicherung des Stickprogramms in einem Programmspeicher vorgesehen, wo es auf Abruf an die einzelnen Stickautomaten ausgegeben werden kann. Das im Programmspeicher gespeicherte Stickprogramm lässt sich bei Bedarf auch auf andere Speicherelemente zur Steuerung herkömmlicher Stickautomaten übertragen.

Anstelle der oben angegebenen Schrittmotorsteuerung, wie sie bei Stickautomaten mit mehreren parallel arbeitenden Nadelköpfen angewendet wird, lässt sich das Stickprogramm gegebenenfalls zweckmässig auch direkt oder indirekt zur Steuerung von Nähmaschinen verwenden, die über einen entsprechenden Abnahmezusatz ein Stickprogramm ausführen können.

Durch die Anwendung der Merkmale der Erfindung wird in kürzester Zeit ohne spezielle (vergrösserte) Vorlage und unabhängig von der Handführung eines Abtastelementes ein Stickprogramm für Stickautomaten erstellt. Die Umsetzung aus dem Motiv in das Stickprogramm erfolgt automatisch. Alle Arbeitsschritte vom Einlegen des Motivs bis zum fertigen Stickprodukt können in einem System durchgeführt werden. Die Durchlaufzeit vom Einlegen der Vorlage mit dem Motiv bis zum ersten Musterstück beträgt nur Minuten, wobei erforderliche Korrekturen des Stickprogramms leicht und rechnergestützt ausgeführt werden können. Da die Stickautomaten in vorteilhafter Weise direkt an den das Stickprogramm aufstellenden Digitalrechner angeschlossen sind, entfallen zusätzliche Datenträger für die Zwischenspeicherung des Stickprogramms. Durch die Verwendung eines ausbaufähigen Digitalrechners sind Zusatzsysteme wie automatische Graphik-Zeichner oder externe Speichergeräte möglich.

In der Zeichnung ist ein Ausführungsbeispiel des erfindungsgemässen Verfahrens in einem Blockschaltbild schematisch erläutert.

Vor einer Video-Kamera 1 befindet sich in entsprechender Aufnahmeentfernung ein Motivträger 2, auf dem die das Motiv bildende Mustervorlage aufliegt und durch entsprechende Lichtquellen 3 gleichmässig ausgeleuchtet wird. Die Video-Kamera entspricht bekannten Ausführungsformen und besitzt entsprechend angeordnete, nach den Einzelfarben vorschaltbare Filter 4.

Bei den Anforderungen an die Video-Kamera ist neben einer ausreichenden Linearität eine hinreichende Auflösung zu fordern, die bei mindestens 8MHz liegen muss, um auch in der Horizontalen eine genügend hohe Anzahl von Bildpunkten, beispielsweise 625, auflösen zu können.

Die Auswertung des durch die Abtastung eines in der Video-Kamera erzeugten Ladungsbildes erfolgt in Binärform unter Vergleich mit der eingestellten Grauwertschwelle oder dem festgelegten Signalwert innerhalb oder ausserhalb eines Grauwertfensters. Dabei wird das Video-Signal einem Grauwertkomparator 5 zugeführt, welcher den Signalwert mit der eingestellten Grauwertschwelle vergleicht oder feststellt, ob der Signalwert innerhalb bzw. ausserhalb des eingestellten Grauwertfensters liegt. Die Ausgangsgrösse des Grauwertkomparators wird über ein Video-Interface 6 der Ein- und Ausgangseinheit 7 eines Digitalrechners 8 zugeführt (z.B. dem unter der Warenbezeichnung PDP 11/23 bekannten Typ).

Dieser erzeugt nach entsprechender Programmierung das Stickprogramm. Der Digitalrechner 8 ist ausserdem über eine Synchron- und Aufnahmesteuerungseinheit 9 mit dem Grauwertkomparator 5 verbunden.

Über eine Standardschnittstelle steht der Digitalrechner 8 mit einem Stickautomaten-Interface 10 in Verbindung, welches entsprechende Steuerimpulse an eine Leistungsendstufe 11 für den Antrieb der die Rahmenverstellung hervorrufenden Schrittmotoren eines Stickautomaten 12 abgibt.

Das berechnete Stickmuster kann an einem Bildschirm-Terminal 13 ausgegeben werden, wodurch sich der Arbeitsablauf bzw. die Auswahl des gewünschten Musters überwachen lässt. Durch den gestrichelt angedeuteten Multiplexbetrieb ist am Stickmaschinen-Interface 10 ein Anschluss von mehreren Stickautomaten 12 für Parallelbetrieb möglich.

## Patentansprüche

1. Verfahren zur Steuerung eines Stickautomaten, insbesondere zur Herstellung von Etiketten und Abzeichen, bei dem die einzelnen Bildpunkte von einer auf einen Motivträger aufgelegten Mustervorlage abgenommen und in ein Speicherelement übertragen werden, und bei dem ferner ein Stickprogramm aufgebaut wird, welches mindestens einen Stickautomaten derart steuert, dass mehrere Bildpunkte abdeckende Stiche mit einem Ausgangsstich und einem Endstich erzeugt werden, dadurch gekennzeichnet, dass von der Mustervorlage den einzelnen Bildpunkten entsprechende Grauwerte durch eine Abtastvorrichtung zeilenweise abgetastet werden, dass diese Grauwerte für jeden Bildpunkt, der einen Grauwert beliebiger Intensität (zwischen weiss und schwarz) darstellt, mit einer einstellbaren Grauwertschwelle verglichen, als oberhalb oder unterhalb der Grauwertschwelle liegend klassifiziert und binär zu einem Motivbild umgesetzt werden, dass die binären Werte gespeichert und einem Digitalrechner zugeführt werden, in dem Umsetzungsprogramme für Stichtechniken gespeichert sind, die verschiedenen bekannten und in jedem Stickmuster wiederkehrenden geometrischen Bildformen wie Linien oder Flächen zugeordnet sind, dass das binär umgesetzte Motivbild abschnittsweise aus den gespeicherten Bildformen zusammengesetzt wird, und dass das vom Digitalrechner erstellte Stickprogramm direkt oder indirekt (über einen nachgeschalteten Programmspeicher auf Abruf) an den Stickautomaten ausgegeben wird.

2. Verfahren zur Steuerung eines Stickautomaten, insbesondere zur Herstellung von Etiketten und Abzeichen, bei dem die einzelnen Bildpunkte von einer auf einen Motivträger aufgelegten Mustervorlage abgenommen und in ein Speicherelement übertragen werden, und bei dem ferner ein Stickprogramm aufgebaut wird, welches mindestens einen Stickautomaten derart steuert, dass mehrere Bildpunkte abdeckende Stiche mit einem Ausgangsstich und einem Endstich erzeugt werden, dadurch gekennzeichnet, dass von der Mustervorlage den einzelnen Bildpunkten entsprechende Grauwerte durch eine Abtastvorrichtung zeilenweise abgetastet werden, dass diese Grauwerte für jeden Bildpunkt, der einen Grauwert beliebiger Intensität (zwischen weiss und schwarz) darstellt, mit einem einstellbaren Grauwertfenster abgetastet, als innerhalb oder ausserhalb des Grauwertfensters liegend klassifiziert und binär zu einem Motivbild umgesetzt werden, dass die binären Werte gespeichert und einem Digitalrechner zugeführt werden, in dem Umsetzungsprogramme für Stichtechniken gespeichert sind, die verschiedenen bekannten und in jedem Stickmuster wiederkehrenden geometrischen Bildformen wie Linien oder Flächen zugeordnet sind, und dass das vom Digitalrechner erstellte Stickprogramm direkt oder indirekt (über einen nachgeschalteten Programmspeicher auf Abruf) an den Stickautomaten ausgegeben wird.

3. Verfahren nach Anspruch 1 oder 2, dadurch gekennzeichnet, dass bei farbigen Mustervorlagen für die einzelnen Farben ein farbspezifisches Grauwertbild erzeugt und abgetastet wird.

4. Verfahren nach Anspruch 1 oder 2, dadurch gekennzeichnet, dass die Mustervorlage optoelektronisch abgetastet wird.

5. Verfahren nach Anspruch 1 oder 2, dadurch gekennzeichnet, dass vor dem Erstellen des Stickprogramms durch den Digitalrechner zusätzliche Eingabegrössen, wie Stichtechnik, Richtungsvorgabe, Schrittweite und optimale Einstichstelle sowie Garnrückführung, eingegeben werden.

6. Verfahren nach Anspruch 1 oder 2, dadurch gekennzeichnet, dass bei Motiven, welche in Bildausschnitten nicht eindeutig analysiert und vom Digitalrechner einer vorgespeicherten Flächen- oder Linienform nicht zugeordnet werden können, der betreffende Bildausschnitt auf einem Bildschirm ausgegeben und eine Arbeitsanweisung durch eine Bedienungsperson angefordert wird.

7. Verfahren nach Anspruch 1 oder 2, dadurch gekennzeichnet, dass die Mustervorlage durch eine Video-Kamera abgetastet wird, und dass bei farbigen Motiven die den einzelnen Farben entsprechenden abtastbaren Bilder durch Vorschalten von Farbfiltern vor das Objektiv der Video-Kamera nacheinander erzeugt werden.

8. Verfahren nach Anspruch 7, dadurch gekennzeichnet, dass die Festlegung des entsprechenden Wertes der Grauwertschwelle bzw. der Intensitätswerte des Grauwertfensters durch die Schärfeeinstellung des Objektivs beeinflusst werden.

9. Verfahren nach Anspruch 1 oder 2, dadurch gekennzeichnet, dass bei kontrastarmen Mustervorlagen eine elektronische Kontrastanhebung vorgesehen ist, die den Grauwertbereich der Mustervorlage spreizt.

10. Verfahren nach Anspruch 1 oder 2, dadurch gekennzeichnet, dass bei Motiven mit Blattstich vor dem Erstellen des Stickprogramms eine Randglättung der Konturen des binär umgesetzten Motivbildes zur Festlegung der eindeutigen Stickrichtung durchgeführt wird.

11. Vorrichtung zur Durchführung des Verfahrens nach einem der vorangehenden Ansprüche, dadurch gekennzeichnet, dass vor dem der Aufnahme der Mustervorlage dienenden Motivträger (2) eine opto-elektronische Abtastvorrichtung (1) angeordnet ist, dass der Abtastvorrichtung (1) ein Grauwertkomparator (5) nachgeschaltet ist, dass der Ausgang des Grauwertkomparators (5) mit einem Digitalrechner (8) in Verbindung steht und dass der Digitalrechner (8) mit mindestens einem Stickautomaten (12) verbunden ist.

**Claims**

1. Procedure for controlling an automatic embroidering machine, especially for the manufacture of labels and badges, wherein a master pattern is placed on a motif carrier and its individual image elements are picked off and transferred into a memory element, and wherein, furthermore, an embroidering program is assembled, this program controlling at least one automatic embroidering machine in a manner such that stitches covering a plurality of image elements are produced, with a starting stitch and a final stitch, characterized in that a scanning device, scanning line by line, is employed in order to read grey scale values from the master pattern, these grey scale values corresponding to the individual image elements, in that these grey scale values, for all the image elements, representing values of any intensity (between white and black), are compared with an adjustable grey-scale-value

9        0 075 801        10

threshold, are classified according to whether they lie above or below this threshold, and are subjected to binary conversion in order to form an image of the motif, in that the binary values are stored in memory, and are supplied to a digital computer, in which stitching-technique change-over programs are stored, stitching techniques being assigned to different, known geometric image forms which recur in every embroidery pattern, such as lines or areas, in that the motif image, converted into binary values, is built up, section by section, from the stored image forms, and in that, following its generation by the digital computer, the embroidering program is output to the automatic embroidering machine, either directly, or indirectly (on demand, via a program memory connected downline).

2. Procedure for controlling an automatic embroidering machine, especially for the manufacture of labels and badges, wherein a master pattern is placed on a motif carrier and its individual image elements are picked off and transferred into a memory element, and wherein, furthermore, an embroidering program is assembled, this program controlling at least one automatic embroidering machine in a manner such that stitches covering a plurality of image elements are produced, with a starting stitch and a final stitch, characterized in that a scanning device, scanning line by line, is employed in order to read grey scale values from the master pattern, these grey scale values corresponding to the individual image elements, in that these grey scale values, for all the image elements, representing values of any intensity (between white and black), are scanned with the aid of an adjustable grey-scale-value window, are classified according to whether they lie inside or outside this window, and are subjected to binary conversion in order to form an image of the motif, in that the binary values are stored in memory, and are supplied to a digital computer, in which stitching-technique change-over programs are stored, stitching techniques being assigned to different, known geometric image forms which recur in every embroidery pattern, such as lines or areas, and in that, following its generation by the digital computer, the embroidering program is output to the automatic embroidering machine, either directly, or indirectly (on demand, via a program memory connected downline).

3. Procedure according to Claim 1 or 2, characterized in that, in cases involving coloured master patterns, a colour-specific grey-scale-value image is generated for each individual colour, and these colour-specific images are scanned.

4. Procedure according to Claim 1 or 2, characterized in that the master pattern is scanned by optoelectronic means.

5. Procedure according to Claim 1 or 2, characterized in that, before the digital computer generates the embroidering program, additional input quantities are introduced, such as stitching technique, direction instructions, step width, optimum needle-insertion point, and thread return.

6. Procedure according to Claim 1 or 2, characterized in that, in cases involving motifs which, over portions of the image, cannot be analyzed unambiguously, and which the digital computer is incapable of assigning to an area, or line, of a form which has previously been stored in memory, the image portion in question is output on a video screen, and a request is displayed, asking for a working instruction to be input by an operator.

7. Procedure according to Claim 1 or 2, characterized in that the master pattern is scanned by a video camera, and in that, when coloured motifs are involved, the scannable images corresponding to the individual colours are generated, one after another, by placing colour filters in front of the lens of the video camera.

8. Procedure according to Claim 7, characterized in that the focus setting of the lens influences the determination of the appropriate value of the grey-scale-value threshold, or of the appropriate intensity values of the grey-scale-value window, as the case may be.

9. Procedure according to Claim 1 or 2, characterized in that, in cases involving master patterns which exhibit low contrast, an electronic contrast-enhancement facility is provided, which expands the grey-scale-value range of the master pattern.

10. Procedure according to Claim 1 or 2, characterized in that, in cases involving motifs with flat stitch, the outlines of the motif image, which has been formed by binary conversion, are subjected to edge-smoothing, so as to obtain an unambiguous definition of the direction in which embroidering is to proceed, this edge-smoothing being performed before the embroidering program is generated.

11. Appliance for carrying out the procedure according to one of the preceding Claims, characterized in that an optoelectronic scanning device (1) is installed facing the motif carrier (2), which serves to receive the master pattern, in that a grey-scale-value comparator (5) is connected downline of the scanning device (1), in that the output terminal of the grey-scale-value comparator (5) is connected to a digital computer (8), and in that the digital computer (8) is connected to at least one automatic embroidery machine (12).

**Revendications**

1. Procédé pour commander une brodeuse automatique, notamment pour réaliser des étiquettes et des insignes, selon lequel les points d'image individuels sont prélevés d'un dessin-modèle placé sur un support de motif et transférés dans un élément de mémoire, et selon lequel, en outre, on établit un programme de broderie qui commande au moins une brodeuse automatique de telle sorte que des points de broderie recouvrant plusieurs points d'image sont produits avec un point de début de broderie et un point de fin de broderie, caractérisé en ce que, sur le des-

6

sin-modèle, des valeurs de gris correspondant aux points d'image individuels sont explorés par ligne à l'aide d'un dispositif d'exploration, que ces valeurs de gris, pour chaque point d'image représentant une valeur de gris d'une intensité quelconque (entre blanc et noir), sont comparées avec une valeur de gris de seuil réglable, qu'elles sont classées comme étant situées au-dessus ou en dessous de la valeur de gris de seuil et converties en code binaire pour former une image de motif, que les valeurs binaires sont mises en mémoire et amenées à un calculateur numérique dans lequel sont mis en mémoire des programmes de conversion pour des techniques de broderie qui sont associées à différentes formes d'images géométriques connues revenant dans chaque motif de broderie, telles que lignes ou surfaces, que l'image de motif convertie en code binaire est assemblée par sections à partir des formes d'image enregistrées, et que le programme de broderie établi par le calculateur numérique est envoyé à la brodeuse automatique directement ou indirectement (par l'intermédiaire d'une mémoire de programme montée à la suite qui est interrogée).

2. Procédé pour commander une brodeuse automatique, notamment pour réaliser des étiquettes et des insignes, selon lequel les points d'image individuels sont prélevés d'un dessin-modèle placé sur un support de motif et transférés dans un élément de mémoire, et selon lequel, en outre, on établit un programme de broderie qui commande au moins une brodeuse automatique de telle sorte que des points de broderie recouvrant plusieurs points d'image sont produits avec un point de début de broderie et un point de fin de broderie, caractérisé en ce que sur le dessin-modèle des valeurs de gris correspondant aux points d'image individuels sont explorées par ligne à l'aide d'un dispositif d'exploration, que ces valeurs de gris, pour chaque point d'image représentant une valeur de gris d'une intensité quelconque (entre blanc et noir) sont comparées à une fenêtre de valeurs de gris réglable, qu'elles sont classées comme étant situées à l'intérieur ou à l'extérieur de la fenêtre de valeurs de gris et converties en code binaire pour former une image de motif, que les valeurs binaires sont mises en mémoire et amenées à un calculateur numérique dans lequel sont mis en mémoire des programmes de conversion pour des techniques de broderie qui sont associées à différentes formes d'images géométriques connues revenant dans chaque motif de broderie, telles que lignes et surfaces, et que le programme de broderie établi par le calculateur numérique est envoyé à la brodeuse automatique directement ou indirectement (par l'intermédiaire d'une mémoire de programme montée à la suite qui est interrogée).

3. Procédé selon la revendication 1 ou 2, caractérisé en ce que, dans le cas de dessins-modèles de couleur, une image de valeur de gris spécifique de la couleur est produite et explorée pour chaque couleur individuellement.

4. Procédé selon la revendication 1 ou 2, caractérisé en ce que le dessin-modèle est exploré opto-électroniquement.

5. Procédé selon la revendication 1 ou 2, caractérisé en ce qu'avant l'établissement du programme de broderie par le calculateur électronique, on introduit des grandeurs supplémentaires, telles que technique de broderie, sens prédéterminé, largeur de pas et emplacement optimal de piqûre, ainsi que guidage de retour du fil.

6. Procédé selon la revendication 1 ou 2, caractérisé en ce que, dans le cas de motifs qui ne sont pas analysés de façon univoque en morceaux d'image et qui ne peuvent pas être affectés par le calculateur numérique à une forme de surface ou de ligne préenregistrée, le morceau d'image concerné est envoyé sur un écran et une instruction de travail est demandée par l'opérateur.

7. Procédé selon la revendication 1 ou 2, caractérisé en ce que le dessin-modèle est exploré par une caméra-vidéo, et que, dans le cas de motifs de couleur, les images correspondant aux couleurs individuelles devant être explorées sont produites en plaçant des filtres colorés devant l'objectif de la caméra vidéo.

8. Procédé selon la revendication 7, caractérisé en ce que la détermination de la valeur de gris de seuil correspondante, ou des valeurs d'intensité de la fenêtre de valeurs de gris, est influencée par le réglage de netteté de l'objectif.

9. Procédé selon la revendication 1 ou 2, caractérisé en ce que dans le cas de dessins-modèles pauvres en contrastes, on prévoit une accentuation électronique des contrastes qui étale la plage des valeurs de gris du dessin-modèle.

10. Procédé selon la revendication 1 ou 2, caractérisé en ce que, dans le cas de motifs au point passé-plat, on effectue, avant l'établissement du programme de broderie, un lissage du bord des contours de l'image de motif convertie en code binaire pour déterminer le sens de broderie univoque.

11. Dispositif pour mettre en œuvre le procédé selon l'une des revendications précédentes, caractérisé en ce qu'on dispose avant le support de motif (2) servant à recevoir le dessin-modèle un dispositif d'exploration opto-électronique (1), qu'on monte à la suite du dispositif d'exploration (1) un comparateur de valeurs de gris (5), que la sortie du comparateur de valeurs de gris (5) est reliée à un calculateur numérique (8) et le calculateur numérique (8) est relié à au moins une brodeuse automatique (12).